# EUROPÄISCHE PATENTSCHRIFT

(11) **EP 1 249 724 B1**
(45) Veröffentlichungstag und Bekanntmachung des Hinweises auf die Patenterteilung: **28.04.2004**
(21) Anmeldenummer: 01126830.7
(22) Anmeldetag: 10.11.2001
(51) Int. Cl.: G02B 6/44

(54) **Kabelhalter**
Cable holder
Porte-câble

(43) Veröffentlichungstag der Anmeldung: 16.10.2002
(73) Patentinhaber: Agilent Technologies, Inc. (a Delaware corporation), Palo Alto, CA 94303 (US)
(72) Erfinder: Schlueter, Malte, 70771 Leinfelden (DE); Heitkamp, Jens, 71126 Gauefelden (DE); Ruf, Tobias, 71272 Renningen (DE)
(74) Vertreter: Barth, Daniel

(56) Entgegenhaltungen:
- DE-A- 4 423 842
- US-A- 4 629 284
- PATENT ABSTRACTS OF JAPAN vol. 013, no. 035 (P-818), 26. Januar 1989 (1989-01-26) & JP 63 233346 A (ADVANTEST CORP;OTHERS: 01), 29. September 1988 (1988-09-29)

## Beschreibung

Die vorliegende Erfindung betrifft einen Kabelhalter, insbesondere für Lichtleitkabel.

Aus US-A-4,629,284 ist eine Vorrichung zum Verbinden von optischen Fasern bekannt. JP-A-63 233346 zeigt einen Kabelhalter als Stecker für blanke Fasern mit den Merkmalen gemäß des Oberbegriffs zu Anspruch 1.

Kabelhalter kommen beispielsweise dann zum Einsatz, wenn optische Bauteile, insbesondere nach ihrer Herstellung, hinsichtlich einer ordnungsgemäßen Funktion geprüft und/oder ausgemessen werden sollen. Zu diesem Zweck müssen regelmäßig eine Vielzahl von Lichtleitkabeln an ein geeignetes Mess- und/oder Prüfgerät angeschlossen werden. Um die Manipulierbarkeit der Lichtleitkabel zu verbessern, werden diese für den Anschluss an das Mess- und/oder Prüfgerät an einem Kabelende mit einem Kabelhalter der eingangs genannten Art ausgestattet. Zweckmäßig bildet dieser Halter dann einen Stecker, der in eine entsprechende Buchse am Mess- und/oder Prüfgerät einsteckbar ist. Hierdurch kann bei den Messungen eine möglichst hohe Güte für die optische Signalübertragung gewährleistet werden. Da die Kabelhalter bei der eigentlichen Anwendung der ausgemessenen optischen Komponenten nicht benötigt werden, besteht der Wunsch, diese Kabelhalter möglichst preiswert und einfach handhabbar auszugestalten. Des weiteren ist es für bestimmte Anwendungen wünschenswert, den Kabelhalter möglichst kompakt und insbesondere flach auszugestalten.

### ZUSAMMENFASSUNG DER ERFINDUNG

Die vorliegende Erfindung beschäftigt sich mit dem Problem, für einen Kabelhalter gemäß des Oberbegriffs zu Anspruch 1 eine verbesserte Ausführungsform anzugeben. Gelöst wird dieses Problem durch den Gegenstand des unabhängigen Anspruchs 1. Vorteilhafte Ausgestaltungen sind Gegenstand der abhängigen Ansprüche.

Die vorliegende Erfindung beruht auf dem Ansatz, den Kabelhalter mit einem Deckelteil und einem Sockelteil auszustatten, die um eine quer zum im Kabelhalter gehalterten Kabel verlaufende Schwenkachse aneinander schwenkverstellbar gelagert sind. Das Sockelteil enthält einen Kabelaufnahmekanal, in den das Kabel einlegbar ist. Das Deckelteil enthält eine Niederhalteranordnung, die beim Verschwenken des Deckelteils in seine am Sockelteil anliegende Schließstellung mit dem Kabelaufnahmekanal zur Fixierung des eingelegten Kabels zusammenwirkt. Es hat sich gezeigt, dass durch die vorgeschlagene Orientierung der Schwenkachse, z.B. die Realisierung eines flachen und kompakten Kabelhalters vereinfacht ist. Beispielsweise kann der Kabelhalter dadurch in Richtung des Kabels seine größte Abmessung aufweisen, wodurch das Schließen des Deckelteils mit einem relativ großen Hebel erfolgt und somit einfach manuell ausführbar ist.

Um die Bedienbarkeit des Kabelhalters zu verbessern, wird durch die Konturierung der Niederhalteranordnung eine in der Nähe der Offenstellung des Deckelteils liegende Vorfixierstellung ausgebildet oder definiert, in der das in den Kabelaufnahmekanal eingelegte Kabel im Bereich der Schwenkachse am Kabelaufnahmekanal vorfixiert und im übrigen Kabelaufnahmekanal noch beweglich ist. Hierdurch wird erreicht, dass das einzulegende Kabel bei vollständig geöffnetem Deckelteil relativ leicht in den Kabelaufnahmekanal einfädelbar bzw. einführbar ist und nach dem Überführen des Deckelteils in die Vorfixierstellung innerhalb des Kabelaufnahmekanals besonders leicht, z.B. durch Zugbelastung, richtig positioniert werden kann.

Bei einer besonders vorteilhaften Weiterbildung kann der Kabelaufnahmekanal wenigstens einen Führungsabschnitt aufweisen, der einen sich bis zu einem Kanalboden hin verjüngenden Querschnitt besitzt und in dem das darin eingelegte Kabel seitlich geführt und abgestützt ist. Der Kabelaufnahmekanal kann außerdem wenigstens einen Positionierabschnitt aufweisen, in dem der Kanalboden parallel zur Schwenkachse eben und breiter als das Kabel ausgebildet ist. In entsprechender Weise kann dann die Niederhalteranordnung für jeden Führungsabschnitt des Kabelaufnahmekanals einen Führungsbereich aufweisen, der einen sich zum Kabelaufnahmekanal hin verjüngenden Querschnitt besitzt und beim Schließen des Deckelteils in den zugeordneten Führungsabschnitt eindringt. Die Niederhalteranordnung besitzt dann auch für jeden Positionierabschnitt des Kabelaufnahmekanals einen Positionierbereich, der beim Schließen des Deckelteils in den zugeordneten Positionierabschnitt eindringt und eine dem Kabelaufnahmekanal zugewandte Fläche aufweist, die parallel zur Schwenkachse eben und breiter als das Kabel ausgebildet ist. Beim Verstellen des Deckelteils in seine Schließstellung drängen die ebenen Flächen der Niederhalteranordnung das Kabel in Richtung Kanalboden, wobei das Kabel in den sich zum Kanalboden verjüngenden Abschnitten des Kabelaufnahmekanals seitlich zur Kanalmitte hingeführt wird. Diese Bauweise unterstützt somit die optimale, geradlinige und zentrale Ausrichtung des Kabels im Kabelaufnahmekanal, so dass das Kabel bei geschlossenem Deckelteil mit einer sehr hohen Wahrscheinlichkeit die dafür vorbestimmte Position einnimmt.

### KURZE BESCHREIBUNG DER ZEICHNUNGEN

Die Erfindung wird im Folgenden weiter unter Heranziehung der Zeichnungen erläutert, wobei sich gleiche Referenzzeichen auf gleiche oder funktional gleiche oder ähnliche Merkmale beziehen. Es zeigen, jeweils schematisch,
- Fig. 1: einen perspektivische Ansicht auf einen Kabelhalter nach der Erfindung bei in seine Offenstellung verschwenktem Deckelteil,
- Fig. 2: eine Schnittansicht durch den Kabelhalter bei in seine Schließstellung verschwenktem Deckelteil entsprechend den Schnittlinien II in Fig. 1,
- Fig. 3: eine Schnittansicht wie in Fig. 2, jedoch entsprechend den Schnittlinien III in Fig. 1,
- Fig.4: eine Schnittansicht wie in Fig. 2, jedoch entsprechend den Schnittlinien IV in Fig. 1,
- Fig. 5: eine perspektivische Ansicht auf einen Ausschnitt eines Geräts, an welches der Kabelhalter anschließbar ist, und
- Fig. 6: eine perspektivische Ansicht auf eine Vorrichtung, in welche der Kabelhalter einsetzbar ist.

### DETAILLIERTE BESCHREIBUNG DER ZEICHNUNGEN

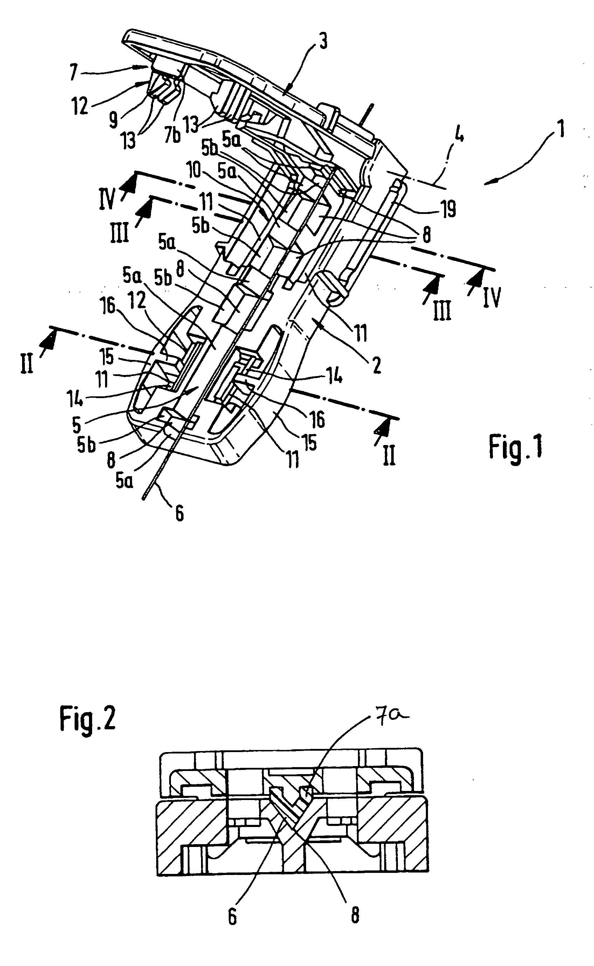

Entsprechend Fig. 1 weist ein erfindungsgemäßer Kabelhalter 1 ein Sockelteil 2 und ein Deckelteil 3 auf. Das Deckelteil 3 ist um eine Schwenkachse 4 am Sockelteil 2 von einer in Fig. 1 gezeigten Offenstellung in eine Schließstellung verschwenkbar gelagert.

Das Sockelteil 2 enthält einen Kabelaufnahmekanal 5, der sich geradlinig erstreckt und an seinen axialen Enden offen ausgebildet ist. Desweiteren ist der Kabelaufnahmekanal 5 entlang seiner gesamten Länge an der dem Deckelteil 3 zugewandten Seite, also hier oben, offen ausgebildet. Dementsprechend ist in der Offenstellung des Deckelteils 3 ein Kabel 6, vorzugsweise ein Lichtleitkabel bzw. eine Lichtleitfaser, in den Kabelaufnahmekanal 5 einlegbar, das sich dann koaxial zum Kabelaufnahmekanal 5 erstreckt. Üblicherweise wird nur ein Ende bzw. ein Endabschnitt des Kabels 6 in den Kabelhalter 1 eingelegt. Das Deckelteil 3 weist an seiner dem Sockelteil 2 zugewandten Seite, also hier unten, eine Niederhalteranordnung 7 auf, die beim Schließen des Deckelteils 3 in den Kabelaufnahmekanal 5 eindringt und das darin eingelegte Kabel 6 am Kabelaufnahmekanal 5 fixiert.

Von besonderer Bedeutung ist hierbei, dass die Schwenkachse 4 im Bereich eines axialen Endes des Kabelaufnahmekanal 5 angeordnet ist und quer, also senkrecht zur Längsrichtung des Kabelaufnahmekanals 6 und somit auch quer zur Kabellängsrichtung verläuft. Dabei kann die Schwenkachse 4 das eingelegte Kabel 6 schneiden.

Wie aus Fig. 1 und den Schnittansichten der Fig. 2 bis 4 hervorgeht, besitzt der Kabelaufnahmekanal 5 mehrere Führungsabschnitte 5a, die jeweils einen sich V-förmig bis zu einem Kanalboden 8 hin verjüngenden Querschnitt aufweisen. Bezüglich der Längsrichtung des Kabels 6 bilden diese Führungsabschnitte 5a für das eingelegte Kabel 6 eine seitliche Führung und bei der verschlossenen Deckelteil 3 außerdem eine seitlich Abstützung.

Jeweils zwischen zwei derartigen Führungsabschnitten 5a besitzt der Kabelaufnahmekanal 5 jeweils einen Positionierabschnitt 5b, in denen der Kanalboden 8 jeweils eben ausgebildet ist und sich parallel zur Schwenkachse 4 erstreckt, wobei der Kanalboden 8 in den Positionierabschnitten 5b quer zum Kabel 6 erheblich größer dimensioniert ist als das Kabel 6.

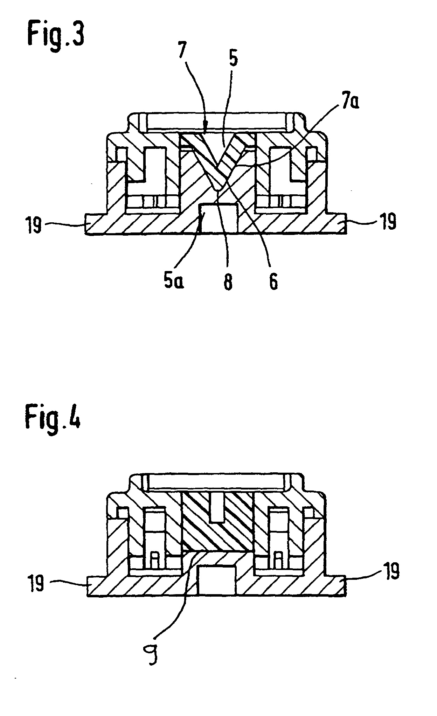

Komplementär zu den Führungsabschnitten 5a besitzt die Niederhalteranordnung 7 Führungsbereiche 7a, die entsprechend den Fig. 2 und 3 jeweils einen sich zum Kabelaufnahmekanal 5 hin verjüngenden, insbesondere V-förmigen, Querschnitt aufweisen. Desweiteren besitzt die Niederhalteranordnung 7 korrespondierend zu den Positionierabschnitten 5b Positionierbereiche 7b, die jeweils eine dem Kabelaufnahmekanal 5 zugewandte Fläche 9 aufweisen, die jeweils - wie der Kanalboden 8 in den Positionierabschnitten 5b - eben und parallel zur Schwenkachse 4 verlaufen und in Richtung der Schwenkachse 4 größer als das Kabel 6 dimensioniert sind.

Der Kabelaufnahmekanal 5 und die Niederhalteranordnung 7 wirken beim Schließen des Deckelteil 3 wie folgt zusammen:

Beim Verschwenken des Deckelteils 3 von der Offenstellung, in welcher das Deckelteil 3 vom Sockelteil 2 absteht, in die Schließstellung, in welcher sich das Deckelteil 3 entlang des Sockelteils 2 erstreckt, dringen die Führungsbereiche 7a der Niederhalteranordnung 7 in die zugeordneten Führungsabschnitte 5a des Kabelaufnahmekanals 5 ein. In entsprechender Weise dringen auch die Positionierbereiche 7b der Niederhalteranordnung 7 in die zugehörigen Positionierabschnitte 5b des Kabelaufnahmekanals 5 ein. Wenn das Kabel 6 bei diesem Schließvorgang noch nicht optimal am Kanalboden 8 zentriert aufliegt, wirken die vorausgehenden Flächen 9 der Positionierbereiche 7b als Mitnehmer und treiben das Kabel 6 in Richtung Kanalboden 8 an. Hierbei bewirken die sich bis zum Kanalboden 8 verjüngenden Seitenflanken der Führungsabschnitte 5a eine Seitenführung für das Kabel 6, wodurch dieses zur Mitte des Kanalbodens 8 hin geführt wird. Zu diesem Zweck stehen die Flächen 9 der Positionierbereiche 7b zumindest gleich weit vom Deckelteil 3 in Richtung Sockelteil 2 ab wie die Führungsbereiche 7a. Anstelle einer Fläche 9 kann der jeweilige Positionierbereich 7b auch eine beliebige andere Kontur aufweisen, die sich parallel zur Schwenkachse 4 gerade bzw. eben erstreckt.

Wenn das Deckelteil 3 vollständig in seine Schließstellung überführt ist, ist das Kabel 6 mittig am Kanalboden 8 zentriert ausgerichtet. Die Niederhalteranordnung 7 ist dabei so dimensioniert, dass das Kabel 6 in der Schließstellung des Deckelteils 3 radial mit dem Kabelaufnahmekanal 5 verspannt ist, wodurch sich eine reibschlüssige oder kraftschlüssige Fixierung des Kabels 6 im Kabelaufnahmekanal 5 ausbildet.

Zweckmäßig ist die Konturierung der Niederhalteranordnung 7 so gewählt sein, dass für das Deckelteil 3 eine Vorfixierstellung definiert wird, die zweckmäßig in der Nähe der Offenstellung liegt. Während in der Offenstellung des Deckelteils 3 das Kabel 6 besonders leicht im Bereich der Schwenkachse 4 eingefädelt werden kann und insbesondere in seiner Längsrichtung im Kabelaufnahmekanal 5 verschiebbar ist, bewirkt die Vorfixierstellung des Deckelteils 3 eine Vorfixierung des Kabels 6 am Kabelaufnahmekanal 5 im Bereich der Schwenkachse 4, die eine Verstellung des Kabels 6 in deren Längsrichtung behindert. Dabei kann das Kabel 6 im übrigen Kabelkanal 5 nach wie vor quer zu sich selbst bewegt werden, um dadurch die manuelle Ausrichtung des Kabels 6 im Kabelaufnahmekanal 5 zu erleichtern. Beispielsweise kann dadurch manuell eine Zugkraft in das Kabel 6 eingeleitet werden, wodurch dieses gestreckt und geradlinig ausgerichtet wird. Eine derartige Vorfixierstellung kann beispielsweise dadurch realisiert werden, dass die Niederhalteranordnung 7 in einem in der Nähe der Schwenkachse 4 ausgebildeten Abschnitt weiter in Richtung Sockelteil 2 vom Deckelteil 3 absteht als in den daran angrenzenden, weiter von der Schwenkachse 4 entfernten Abschnitten.

Vorteilhafterweise ist die Niederhalteranordnung 7 aus einem elastisch nachgiebigen Werkstoff, z.B. aus einem elastomeren Kunststoff, hergestellt. Dabei kann die Niederhalteranordnung 7 durchaus aus einem anderen Werkstoff bestehen als das Deckelteil 3. Beispielsweise kann die Niederhalteranordnung 7 an das Deckelteil 3 angespritzt sein bzw. vice versa.

Das Deckelteil 3 kann bei einer bevorzugten Ausführungsform lösbar am Sockelteil 2 angebracht sein. Beispielsweise besitzt das Deckelteil 3 im Bereich der Schwenkachse 4 Haken, die bezüglich der Schwenkachse 4 in einer bestimmten radialen Richtung offen sind und auf Lagerzapfen, die koaxial zur Schwenkachse 4 am Sockelteil 2 angeordnet sind, aufsteckbar bzw. von diesen abnehmbar sind. Zweckmäßig erfolgt das Anbringen bzw. Lösen des Deckelteils 3 in einer Schwenkstellung, die über die Offenstellung gem. Fig. 1 hinausgeht. Ein abnehmbares Deckelteil 3 kann dann von Vorteil sein, wenn der Kabelhalter 1 zur Positionierung des Kabels 6 in einer Spleißeinrichtung verwendet wird und nach dem Spleißvorgang vom Kabel 6 wieder entfernt werden soll.

Bei einer anderen, besonders preiswerten Bauweise kann das Deckelteil 3 auch über ein Filmscharnier am Sockelteil 2 schwenkgelagert sein. Zweckmäßig können dann Deckelteil 3 und Sockelteil 2 einteilig oder einstückig hergestellt sein, beispielsweise durch ein Spritzgußverfahren.

Um die Handhabung des Kabelhalters 1 zu vereinfachen, enthält dieser eine Feder 10, die hier als Schenkelfeder mit zwei Schenkeln 11 ausgebildet ist. Die Feder 10 ist so angeordnet, dass sie das Deckelteil 3 in seine Offenstellung vorspannt.

Damit das Deckelteil 3 in seiner Schließstellung verbleibt, ist eine Verrastung 12 vorgesehen, die bei Erreichen der Schließstellung einrastet und das Deckelteil 3 am Sockelteil 2 festlegt. Wenn der Kabelhalter 1 als Einwegteil ausgebildet ist, kann diese Verrastung 12 unlösbar ausgestaltet sein. Sofern der Kabelhalter 1 als Mehrwegteil konzipiert ist, ist die Verrastung 12 lösbar ausgebildet.

Die Verrastung 12 besitzt hier mehrere Rasthaken 13, die am Deckelteil 3 ausgebildet sind und in Richtung Sockelteil 2 von diesem abstehen. Am Sockelteil 2 ist für je zwei parallel angeordnete Rasthaken 13 jeweils ein Halteglied 14 vorgesehen, das mit den zugeordneten Rasthaken 13 beim Verschließen des Deckelteils 3 zusammenwirkt. Sobald das Deckelteil 3 seine Schließstellung erreicht, hintergreifen die Rasthaken 13 die Halteglieder 14. Bei der hier gezeigten Ausführungsform sind die Halteglieder 14 durch Endabschnitte der Schenkel 11 der Feder 10 gebildet, wodurch die Feder 10 eine Doppelfunktion erhält.

Zum Lösen der Verrastung 12 sind die Halteglieder 14 parallel zur Schwenkachse 4 aus den Rasthaken 13 ausrückbar angeordnet. Zu diesem Zweck ist am Sockelteil 2 für jedes Halteglied 14 jeweils eine Lösetaste 15 angeformt, die jeweils in Richtung auf den Kabelkanal 5 hin parallel zur Schwenkachse 4 beweglich am Sockelteil 3 gehaltert sind. An der dem Halteglied 14 zugewandten Innenseite trägt jede Lösetaste 15 einen Vorsprung 16, der bei einer Betätigung der Lösetaste 15 parallel zur Schwenkachse 4 radial am Halteglied 14 zur Anlage kommt und dieses aus den zugehörigen Rasthaken 13 ausrückt. Die Federelastizität der Federschenkel 11 bewirkt dabei, daß sich die als Halteglieder 14 dienenden Federschenkelabschnitte selbsttätig wieder in ihre Einrückposition zurückverstellen. Auch die Lösetasten 15 stellen sich aufgrund ihrer Materialeigenschaften selbsttätig wieder in ihre unbetätigte Ausgangslage zurück. Die Anordnung der Lösetasten 15 ist hier vorteilhaft so gewählt, dass diese z.B. zwischen Daumen und Zeigefinger gleichzeitig betätigt werden können, indem sie aufeinanderzu verstellt werden. Eine Besonderheit ist hierbei außerdem, dass sich die Vorsprünge 16 in der Schließstellung des Deckelteils 3 jeweils zwischen zwei parallelen Rasthaken 13 erstrecken, wodurch sich Rasthaken 13 und Vorsprünge 16 gegenseitig stabilisieren. Zweckmäßig sind die Lösetasten 15 einteilig oder einstückig am Sockelteil 2 ausgebildet.

Vorzugsweise sind Sockelteil 2 und Deckelteil 3 bezüglich einer senkrecht auf der Schwenkachse 4 stehenden Längsmittelebene des Kabelaufnahmekanals 5 spiegelsymmetrisch ausgebildet.

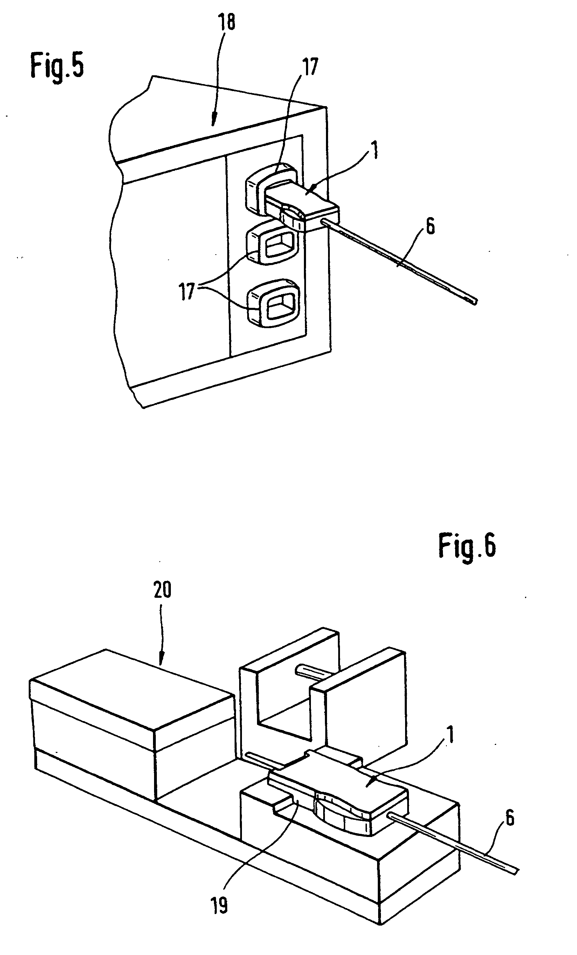

Gemäß Fig. 5 bildet der Kabelhalter 1 bei einer bevorzugten Anwendungsform im geschlossenen Zustand einen Stecker, in dem das Kabel 6 in einer vorbestimmten Weise gehaltert ist. Dieser Stecker (Kabelhalter 1) kann z.B. in eine Buchse 17 eines Mess- und/oder Prüfgeräts 18 eingesteckt werden, beispielsweise um das Kabel 6 bzw. ein damit verbundenes Bauteil zu messen und/oder zu prüfen.

Gemäß Fig. 6 kann der Kabelhalter 1 beispielsweise durch Schienen 19 (vgl. auch die Fig. 1, 3 und 4) an eine Vorrichtung 20 adaptiert sein, die zur Bearbeitung des Kabels 6, insbesondere einer im Kabel 6 verlaufenden Lichtleitfaser, z.B. Glasfaser, dient. Beispielsweise kann diese Vorrichtung 20 zum Abisolieren des Kabels 6 und/oder zum Schneiden der Lichtleitfaser und/oder zum Spleißen der Lichtleitfaser ausgebildet sein. Der Kabelhalter 1 ist über die Schienen 19 an der Vorrichtung festlegbar und sorgt dabei für die erforderliche Positionierung des Kabels 6 in der Vorrichtung 20. Durch die Adaption des Kabelhalters 1 an die Vorrichtung 20 kann das Kabel 6 im Kabelhalter 1 nach seiner Bearbeitung in der Vorrichtung 20 verbleiben, wodurch stets eine definierte Position für das Kabel 6 im Kabelhalter 1 gewährleistet werden kann. Dies ist insbesondere dann von Vorteil, wenn das Kabel 6 nach seiner Bearbeitung in der Vorrichtung 20 z.B. an das Gerät 18 gemäß Fig. 5 angeschlossen werden soll.

Aus der Darstellung gemäß Fig. 6 wird besonders deutlich, dass der Kabelhalter 1 nach der Erfindung sehr kompakt und insbesondere flach baut. Der Kabelhalter 1 ist somit in einer parallel zur Schwenkachse 4 gemessenen Breite deutlich größer als in einer quer zur Schwenkachse 4 und quer zum Kabelaufnahmekanal 5 gemessenen Höhe. Eine in Längsrichtung des Kabelaufnahmekanals 5 gemessene Länge des Kabelhalters 1 kann relativ groß gewählt werden, um eine definierte Positionierung des Kabels 6 im Kabelhalter 1 zu erzielen.

Der erfindungsgemäße Kabelhalter 1 kann besonders preiswert, z.B. aus Kunststoff, hergestellt werden. Die gewählte Orientierung der Schwenkachse 4 ermöglicht dabei eine kompakte Bauweise mit einfacher Handhabung. Beispielsweise ermöglicht die gewählte Anordnung der Schwenkachse 4 die Einleitung relativer großer Schließkräfte auf Deckelteil 3 und Sockelteil 2, so dass der Kabelhalter 1 bequem manuell verschließbar ist.

## Patentansprüche

1. Kabelhalter, insbesondere für Lichtleitkabel, mit einem Sockelteil (2), das einen oben und axial offenen Kabelaufnahmekanal (5) enthält, in den ein Kabel (6) einlegbar ist, und mit einem Deckelteil (3), das eine Niederhalteranordnung (7) aufweist und am Sockelteil (2) von einer Offenstellung, in der das Deckelteil (3) vom Sockelteil (2) absteht und in der das Kabel (6) in den Kabelaufnahmekanal (5) einlegbar ist, in eine Schließstellung, in der sich das Deckelteil (3) entlang des Sockelteils (2) erstreckt und in der die Niederhalteranordnung (7) das eingelegte Kabel (6) am Kabelaufnahmekanal (5) fixiert, um eine Schwenkachse (4) schwenkverstellbar gelagert ist,
**dadurch gekennzeichnet,**
**dass** die Schwenkachse (4) sich im Bereich eines axialen Endes des Kabelaufnahmekanals (5) im Wesentlichen quer zur Längsrichtung des Kabelaufnahmekanals (5) und/oder im Wesentlichen quer zur Kabeltängsrichtung erstreckt, und
**dass** durch die Konturierung der Niederhalteranordnung (7) eine in der Nähe der Offenstellung liegende Vorfixierstellung definiert ist, in der das in den Kabelaufnahmekanal (5) eingelegte Kabel (6) im Bereich der Schwenkachse (4) am Kabelaufnahmekanal (5) vorfixiert und im übrigen Kabelaufnahmekanal (5) quer zum Kabelaufnahmekanal (5) beweglich ist.

2. Kabelhalter nach Anspruch 1, mit mindestetens einem der folgenden Merkmale:
- die Niederhalteranordnung (7) steht in einem nahe der Schwenkachse (4) ausgebildeten Abschnitt weiter in Richtung Sockelteil (2) vom Deckelteil (3) ab als in einem daran angrenzenden Abschnitt;
- die Niederhalteranordnung (7) besteht aus einem elastisch nachgiebigen Werkstoff;
- der Kabelaufnahmekanal (5) weist wenigstens einen Führungsabschnitt (5a) auf, der einen sich bis zu einem Kanalboden (8) hin verjüngenden Querschnitt besitzt und in dem das darin eingelegte Kabel (6) seitlich geführt und abgestützt ist;
- der Kabelaufnahmekanal (5) weist wenigstens einen Positionierabschnitt (5b) auf, in dem der Kanalboden (8) parallel zur Schwenkachse (4) eben und breiter als das Kabel (6) ausgebildet ist;
- die Niederhalteranordnung (7) weist für jeden Führungsabschnitt (5a) des Kabelaufnahmekanals (5) einen Führungsbereich (7a) auf, der einen sich zum Kabelaufnahmekanal (5) hin verjüngenden Querschnitt besitzt und der beim Schließen des Deckelteils (3) in den zugeordneten Führungsabschnitt (5a) eindringt;
- die Niederhalteranordnung (7) weist für jeden Positionierabschnitt (5b) des Kabelaufnahmekanals (5) einen Positionierbereich (7b) auf, der beim Schließen des Deckelteils (3) in den zugeordneten Positionierabschnitt (5b) eindringt und eine dem Kabelaufnahmekanal (5a) zugewandte Kontur oder Fläche (9) aufweist, die parallel zur Schwenkachse (4) gerade und/oder eben und breiter als das Kabel (6) ausgebildet ist;
- das Deckelteil (3) ist lösbar am Sockelteil (2) angebracht;
- wenigstens eine Feder (10) ist vorgesehen, die das Deckelteil (3) in seine Offenstellung vorspannt.

3. Kabelhalter nach einem der Ansprüche 1 oder 2,
**dadurch gekennzeichnet,**
**dass** eine Verrastung (12) vorgesehen ist, die das Deckelteil (3) in seiner Schließstellung am Sockelteil (2) festlegt.

4. Kabelhalter nach Anspruch 3,
**dadurch gekennzeichnet,**
**dass** die Verrastung (12) wenigstens einen Rasthaken (13) aufweist, der in der Schließstellung ein Halteglied (14) hintergreift, wobei das Halteglied (14) zum Lösen der Verrastung (12) aus dem Rasthaken (13) ausrückbar ist.

5. Kabelhalter nach Anspruch 4,
**dadurch gekennzeichnet,**
**dass** das Halteglied (14) durch ein Federteil (11) gebildet ist, das federelastisch zwischen seiner Einrückposition, in der es vom Rasthaken (13) hintergreifbar ist, und seiner Ausrückposition verstellbar ist, in der es den Rasthaken (13) freigibt.

6. Kabelhalter nach Anspruch 5,
**dadurch gekennzeichnet,**
**dass** die Feder (10) als Schenkelfeder ausgebildet ist, wobei wenigstens ein Schenkel (11) der Schenkelfeder (10) in einem Abschnitt das zum Lösen der Verrastung (12) verstellbare Federteil (14) bildet.

7. Kabelhalter nach einem der Ansprüche 4 bis 6,
**dadurch gekennzeichnet,**
**dass** am Sockelteil (2) oder am Deckelteil (3) eine Lösetaste (15) angeordnet ist, die bei ihrer Betätigung zum Ausrücken des Halteglieds (14) aus dem Rasthaken (13) auf das Halteglied (14) einwirkt.

## Claims

1. A cable holder, in particular, a cable holder for fiberoptic cables, with a base piece (2) that incorporates a cable receiving duct (5) that is open on top and axially, into which a cable (6) may be inserted, and with a cover piece (3) that has a retaining structure (7) and is hinged to a base piece (2) such that it may be pivoted about a swivel axis (4) from an opened position, at which the cover piece (3) is raised above the base piece (2) and the cable (6) may be inserted into the cable receiving duct (5), to a closed position, at which the cover piece (3) is mated to the base piece (2) and the retaining structure (7) clamps the cable (6) that has been inserted to the cable receiving duct (5),
wherein
the swivel axis (4) runs essentially transverse to the longitudinal axis of the cable receiving duct (5) in the vicinity of an end of the cable receiving duct (5) and/or essentially transverse to the longitudinal axis of the cable, and
the contouring of the retaining structure (7) defines a preliminary clamping location in the vicinity of the opened position, at which the cable (6) inserted into the cable receiving duct (5) is preliminarily clamped to the cable receiving duct (5) in the vicinity of the swivel axis (4), but is free to move laterally with respect to the cable receiving duct (5) over the remainder of the cable receiving duct (5).

2. A cable holder according to claim 1 having at least one of the following features:
- within a section near the swivel axis (4), the retaining structure (7) protrudes farther, i.e., extends farther in the direction of the base piece (2), from the cover piece (3) than within an adjacent section;
- the clamping arrangement (7) consists of an elastic material;
- the cable receiving duct (5) has at least one guiding section (5a) that has a cross-section that tapers down to a duct base (8) and laterally guides and supports the cable (6) that has been inserted therein;
- the cable receiving duct (5) has at least one positioning section (5b), within which the duct base (8) of the channel is planar parallel to the swivel axis (4) and broader than the cable (6);
- for every guiding section (5a) of the cable receiving duct (5), the retaining structure (7) has a guiding zone (7a) that has a cross-section that tapers toward the cable receiving duct (5) and penetrates into the associated guiding section (5a) when the cover piece (3) is closed;
- for every positioning section (5b) of the cable receiving duct (5), the clamping arrangement (7) has a positioning zone (7b) that penetrates into the associated positioning section (5b) when the cover piece (3) is closed and a contour or surface (9) facing the cable receiving duct (5a) that is straight and/or planar parallel to the swivel axis (4) and broader than the cable (6);
- the cover piece (3) is detachable from the base piece (2);
- at least one spring (10) that pretensions the cover piece (3) at its opened position is provided.

3. A cable holder according to either of claim 1 or claim 2,
**wherein**
a lock (12) is provided that fastens the cover piece (3) in place on the base piece (2) when the former is in its closed position.

4. A cable holder according to claim 3,
**wherein**
the lock (12) has at least one snap-fit (13) that, in the closed position, catches the holding element (14) from behind, wherein the holding element (14) may be retracted from the snap-fit (13) in order to disengage the lock (12).

5. A cable holder according to claim 4,
**wherein**
the holding element (14) is formed by a spring element (11) that may be adjusted spring-elastically between its locked position, in which it can be caught from behind by the snap-fit (13), and its unlocked position, in which it releases the snap-fit (13).

6. A cable holder according to claim 5,
**wherein**
the spring (10) is in the form of a torsion spring, where at least one leg (11 ) of the torsion spring (10) of a section forms the adjustable spring element (14) for disengaging the lock (12).

7. A cable holder according to any of claims 4 - 6,
**wherein**
a release key (15) that acts on the holding element (14) when actuated in order to release the holding element (14) from the snap-fit (13) is arranged on the bottom piece (2) or cover piece (3).

## Revendications

1. Porte-câble, en particulier pour des câbles à fibres optiques, avec un socle (2) qui comprend un canal de retenue du câble (5), ouvert vers le haut et de manière axiale, dans lequel il est possible d'insérer un câble (6), et avec un couvercle (3) qui comprend une structure de serrage (7) et est logé autour d'un axe de pivotement (4), avec possibilité de réglage du pivotement, au niveau du socle (2), d'une position ouverte, dans laquelle le couvercle (3) s'éloigne du socle (2) et dans laquelle le câble (6) peut être inséré dans le canal de retenue du câble (5), à une position fermée dans laquelle le couvercle (3) s'étend le long du socle (2) et dans laquelle la structure de serrage (7) fixe le câble (6) inséré au niveau du canal de retenue du câble (5), **caractérisé en ce que** l'axe de pivotement (4) s'étend au niveau d'une extrémité axiale du canal de retenue du câble (5), de manière essentiellement transversale au sens longitudinal du canal de retenue du câble (5) et/ou de manière essentiellement transversale au sens longitudinal du câble et **en ce qu'**est définie, par le pourtour de la structure de serrage (7), une position de préfixation, située à proximité de la position ouverte, dans laquelle le câble, inséré dans le canal de retenue du câble (5), est préalablement fixé sur le canal de retenue du câble (5) au niveau de l'axe de pivotement (4) et est déplaçable dans le reste du canal de retenue du câble (5), transversalement à ce dernier.

2. Porte-câble selon la revendication 1, avec au moins l'une des caractéristiques suivantes :
- la structure de serrage (7) s'éloigne du couvercle (3), dans un segment configuré à proximité de l'axe de pivotement (4), plus loin en direction du socle (2), sous la forme d'un segment adjacent au couvercle,
- la structure de serrage (7) est composée d'un matériau élastiquement déformable,
- le canal de retenue du câble (5) comporte au moins un segment de guidage (5a) qui possède une coupe transversale s'effilant jusqu'à un fond de canal (8) et dans lequel le câble (6) inséré à l'intérieur est guidé et étayé latéralement,
- le canal de retenue du câble (5) comporte au moins un segment de positionnement (5b) dans lequel le fond de canal (8) est configuré, parallèlement à l'axe de pivotement (4), de manière plane et plus large que le câble (6),
- la structure de serrage (7) comporte, pour chaque segment de guidage (5a) du canal de retenue du câble (5), une zone de guidage (7a) qui possède une coupe transversale s'effilant jusqu'au canal de retenue du câble (5) et qui pénètre dans le segment de guidage (5a) associé lors de la fermeture du couvercle (3),
- la structure de serrage (7) comporte, pour chaque segment de positionnement (5b) du canal de retenue du câble (5), une zone de positionnement (7b) qui pénètre dans le segment de positionnement (5b) associé lors de la fermeture du couvercle (3) et comprend un contour ou une surface (9) tourné(e) vers le canal de retenue du câble (5a) qui est configuré(e), parallèlement à l'axe de pivotement (4), de manière linéaire et/ou plane et plus large que le câble (6),
- le couvercle (3) est monté sur le socle (2) de manière à pouvoir être démonté,
- au moins un ressort (10) est prévu, lequel précontraint le couvercle (3) dans sa position ouverte.

3. Porte-câble selon l'une des revendications 1 ou 2, **caractérisé en ce qu'**un dispositif à enclenchement (12) est prévu, lequel fixe le couvercle (3) au socle dans sa position fermée.

4. Porte-câble selon la revendication 3, **caractérisé en ce que** le dispositif à enclenchement (12) comprend au moins un crochet d'arrêt (13) qui engrène un élément de retenue (14) en position fermée, l'élément de retenue (14) pouvant être désengagé du crochet d'arrêt (13) pour détacher le dispositif à enclenchement (12).

5. Porte-câble selon la revendication 4, **caractérisé en ce que** l'élément de retenue (14) est formé par une pièce à ressort (11) qui est réglable de manière élastique entre sa position d'engagement, dans laquelle elle peut être engrenée par le crochet d'arrêt (13), et sa position de désengagement dans laquelle elle libère le crochet d'arrêt (13).

6. Porte-câble selon la revendication 5, **caractérisé en ce que** le ressort (10) est configuré en tant que ressort à branches, au moins une branche (11) du ressort à branches (10) formant, dans un segment, la pièce à ressort (14) réglable pour détacher le dispositif à enclenchement (12).

7. Porte-câble selon l'une des revendications 4 à 6, **caractérisé en ce qu'**on a disposé sur le socle (2) ou le couvercle (3) un poussoir de desserrage (15) lequel, lorsqu'il est actionné pour le désengagement de l'élément de retenue (14) hors du crochet d'arrêt (13), agit sur l'élément de retenue (14).
